# EUROPEAN PATENT APPLICATION

(11) **EP 2 706 641 A1**
(43) Date of publication of application: **12.03.2014**
(21) Application number: 12183093.9
(22) Date of filing: 05.09.2012
(51) Int. Cl.: H02J 3/28, H02J 15/00

(54) **Method to provide primary control power by an energy storage system**

(71) Applicant: Siemens Aktiengesellschaft, 80333 München (DE)
(72) Inventor: Wolf, Erik, 91341 Röttenbach (DE)

(57) **Abstract**

A method for stabilizing an electrical grid (4, 8) comprising a load set point is disclosed. The method is characterised in connecting an energy storage system (1) comprising an electrolyser (5) to the grid (4, 8), operating the electrolyser (5) at a predetermined power set point, and changing the power set point of the electrolyser (5) depending on changes of the load set point of the grid (4, 8).

## Description

### Field of the Invention

The present invention relates to a method for stabilizing an electrical grid and to a use of an energy storage system for stabilizing an electrical grid.

### Background Art

In the document EP 2 138 678 A1 a method for storing energy by using hydrogen is described. A combination of an electrolyser, a gas storage and a thermal power plant are arranged in a way that they can operate as an energy storage system. This system provides a technical feature to act as an energy sink during charge and as an energy source during discharge. This capacity is important when integrating renewable energy into a grid.

The used thermal power plant can also offer to a certain amount primary control feature as long as its generator is directly connected to the grid. This so-called "inertia" is of growing importance in power grid with increasing amount of renewable energy generators since these systems are mainly grid connected via power electronics with a very limited "inertia". This "inertia" stabilizes the power grid by providing short circuit current which triggers overload line interrupters or it consumes sudden surplus power as it occurs during the disconnection of a large consumer.

Inertia is somehow similar to primary control. It is balancing power (positive and negative) to stabilize an electrical grid by consuming or releasing high power for a short period of time. This feature immerses from the mechanical inertia of the rotating equipment. Caused by the system limitation inertia is an equipment related parameter which is fix.

In the document DE 100 55 973 A1 a method and a device for controlling and grading of the power output of an offshore power plant, for example a wind power plant, is disclosed, wherein energy excess is stored using electrolysers.

In energy systems with mainly conventional power plants inherently each power plant provides inertial with its rotating mass. The additional "primary control need" is therefore small, usually some percent related to the installed power. The installed power may for example be at least 1 GW. Primary control will be provided by special contracted power plants which operate at a de-rated power set point. It allows the power plant to provide very fast extra power to the grid by opening e.g. the steam control valve fully. The opposite (sudden power reduction) can be achieved by e.g. a pumped hydro storage.

### Description of the invention

It is therefore an objective of the present invention to provide an advantageous method for stabilizing an electrical grid and to provide a use of an energy storage system for stabilizing an electrical grid.

This objective is solved by a method for stabilizing an electrical grid as claimed in claim 1 and a use of an energy storage system for stabilizing an electrical grid as claimed in claim 12. The depending claims define further developments of the present invention.

The inventive method for stabilizing an electrical grid is related to a grid comprising a load set point. The method comprises the steps of connecting an energy storage system comprising an electrolyser to the grid, operating the electrolyser at a predetermined power set point, and changing the power set point of the electrolyser depending on changes of the load set point of the grid. By means of the inventive method the load and/or the voltage and/or the frequency can be stabilized.

For example, the electrical grid may comprise an installed power of at least 1 GW. Power of the grid can be dissipated or consumed by increasing the load of the electrolyser depending on changes of the load set point of the grid. Alternatively, power can be released or virtually injected into the grid by reducing the load of the electrolyser depending on changes of the load set point of the grid.

A thermal power plant, for example a gas turbine, can be connected to the grid and power of the grid can be dissipated by increasing the load of the electrolyser or power can be released into the grid by reducing the load of the electrolyser and/or increasing the power output of the thermal power plant depending on changes of the load set point of the grid.

Preferably the thermal power plant and the electrolyser are operated or performed in combination, for example at the same time or parallel. Advantageously the thermal power plant and the electrolyser are operated or performed at a nominal power level of the same magnitude order, which means at a power level of the same scale, order of magnitude or dimension. For example, the electrolyser can be operated at a nominal power which has a value between 0.3 and 0.7 of the nominal power of the thermal power plant, advantageously between 0.4 and 0.6, preferably at 0.5 of the nominal power of the thermal power plant.

The combination of thermal power plant and electrolyser has the advantage that the system provides an extremly high dynamic. For example, the thermal power plant can operate at a power of 100 MW. The electrolyser can operate at a nominal power between 30 MW and 70 MW, for instance between 40 MW and 60 MW, preferably at a nominal power of 50 MW. When the thermal power plant operates at a power of 100 MW and the electrolyser operates at a nominal power of 50 MW (net export: 100MW-50MW=50MW), the power of the electrolyser can be reduced to 0 MW (by switching the electrolyser off) and can be increased to 100 MW. These power changes can be realised very fast.

Very high dynamic changes of the storage power output of more than 100%/min can be realised. A paralleled operation of the electrolyser and a thermal power plant such as a gas turbine, at which the nominal power of the electrolyser is equal or at the same order of magnitude of the thermal power plant's nominal power provides that feature. The electrolyser is used to modulate the storage systems power out-put at the electrolyser's dynamic capabilities.

In a first operation mode, for instance, the storage provides positive control power to the grid. The electrolyser may operate at 0 load, the thermal power plant may operate at rated or set power.

In a second operation mode, for example, the storage needs to reduce the power out-put faster than the thermal power plant can achieve. The electrolyser is fast ramped-up to the new, for example lower, power set point. The thermal power plan can remain at nominal power production, especially if the operator expects a positive power output again. Otherwise the power plant can be throttled down slowly.

In a third operation mode, for instance, the storage needs to provide negative control power. While the thermal power plant can remain at nominal power, the threefold over-load capability of the electrolyser is used to modulate the negative control power. Also in this example the thermal power plant can remain at the current power set-point, if needed.

Even a very slow and/or inflexible power plant will become flexible when combined with an electrolyser as described. Generally, the power set point of the electrolyser can be changed up to 100 MW or up to 1000 MW, depending on the used electrolyser. This means, that power between 0W and 100MW or between 0W and 1000 MW of the grid can be dissipated by the electrolyser or can be released into the grid by means of the electrolyser. Preferably, the maximum load changes are directly linked to the rated power or rated overload capability of the electrolyser, which limits the performance.

Moreover, an energy storage system comprising a thermal power plant can be used. The electrolyser and the thermal power plant can be operated at the same time depending on changes of the load set point of the grid. The thermal power plant and the electrolyser can be connected via the electrical grid. The electrolyser and the thermal power plant can be located at the same physical location or they can be distributed and just connected via the electrical grid. Generally, electrolyser and thermal power plant must not be at the same physical location. In both variants power can be released or virtually injected into the grid by the electrolyser only and power can be injected into the grid by the thermal power plant and the electrolyser at the same time. The parallel operation of the electrolyser and the thermal power plant allows for a significant increase of the operation range.

Furthermore, the hydrogen produced by the electrolyser can be stored, for example in a hydrogen gas storage, preferably in a compressed form.

Advantageously the power set point of the electrolyser can be controlled, for instance by means of a control unit. The load set point of the grid can also be controlled, for example by means of a control unit. The power set point of the electrolyser and the load set point of the grid may be controlled by means of the same control unit.

In the present invention the electrolyser and thermal power plant will become active components to provide primary reserve. Especial controller may coordinate the interaction between the storage components and the electrical grid needs. The thermal power plant alone cannot offer the magnitude of primary control, for example at least 1 MW. The fast changes are done via the electrolyser. A further advantage of the present invention lies in utilizing the fast controllability of an electrolyser for primary reserve services including a controller to coordinate the actions and even increasing the power range further by using the thermal power plant of the storage.

For example, a power change from 0% to 100% of the nominal power of the electrolyser can be provided within less than 10 minutes. Moreover, a power change from 100% to 200% or from 200% to 300% of the nominal power of the electrolyser can be provided within less than 10 seconds. This means that a high value of primary control power, which includes positive and negative control power, is available in a very short time to stabilize the grid.

The inventive use is characterized in using an energy storage system comprising an electrolyser for stabilizing an electrical grid. Generally, the inventive use of an energy storage system for stabilizing an electrical grid has the same advantages as the previously described inventive method. In particular it provides a very fast and effective primary control means with a high dynamic and amplitude.

For instance an energy storage system comprising a thermal power plant and/or a hydrogen gas storage can be used. Moreover, an electrical storage system comprising a control unit for controlling the power set point of the electrolyser and/or the load set point of the grid can be used. Generally, the energy storage system, as previously described, can be used for performing the previously described inventive method for stabilizing an electrical grid. For example, a power change of between 0% and 100% of a predefined normal operation power of the grid can be provided within less than 10 seconds and/or a power change of between 0% and 300% of a predefined normal operation power of the grid can be provided within less than 10 minutes.

### Description of embodiments

Further features, properties and advantages of the present invention will become clear from the following description of embodiments in conjunction with the accompanying drawings. The embodiments do not limit the scope of the present invention which is determined by the appended claims. All described features are advantageous as separate features or in any combination with each other.
- Figure 1: schematically shows the power of the grid in percent depending on the time in arbitrary units.
- Figure 2: schematically shows an energy storage system.
- Figure 3: schematically shows a more detailed embodiment of an energy storage system.

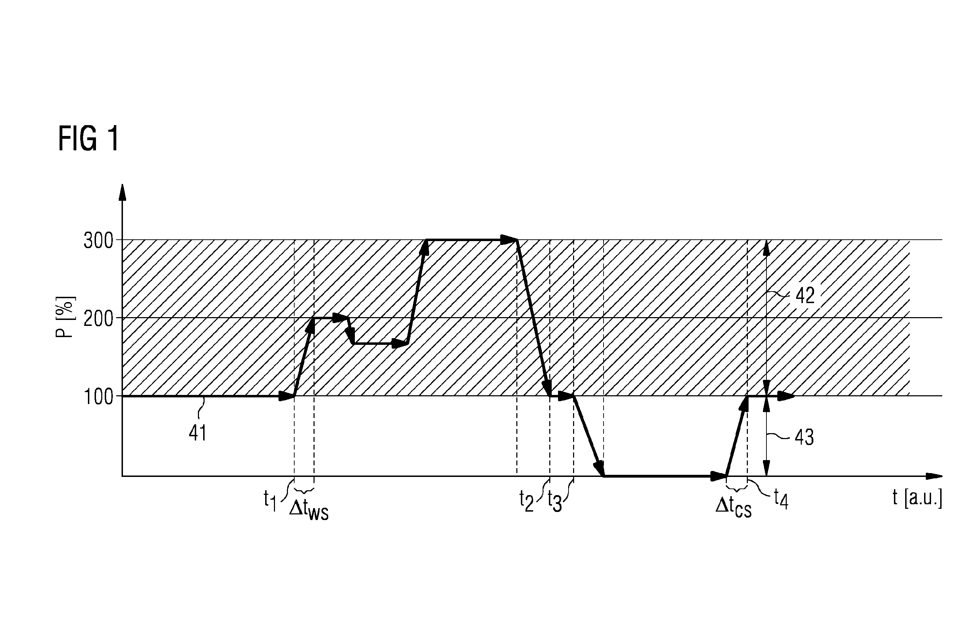

The inventive method for stabilizing an electrical grid will now be described using the example shown in Figure 1. The x-axis of the diagram shown in Figure 1 designates the time t in arbitrary units. The y-axis designates the power of the electrolyser in percent for depending on a particular normal operation power set point or nominal power. An energy storage system comprising the electrolyser is connected to the grid. The electrolyser is operating at nominal power. The power set point of the electrolyser is changed depending on changes of the load set point of the grid.

In the first period of time from 0 to t₁ the grid operates at its normal operation load set point, which means that the electrolyser is operating at 100% of the nominal power.

At the time t₁ for example a large consumer or a number of additional consumers are disconnected from the grid and a surplus power in the grid occurs. To stabilize the grid the electrolyser dissipates the power by increasing the load. In the time period from t₁ to t₂ negative control power is provided to the grid by increasing the power set point of the electrolyser. For example, to consume additional power from the grid the electrolyser is operating at 200% or 300% of the nominal power. This allows primary control by providing negative control power.. At the time t₃ additional consumers are connected to the grid. To stabilize the grid the electrolyser decreases the load. In other words, in the time period between t₃ and t₄ the electrolyser provides positive control power. The electrolyser can be operated with low load or can be switched off. This means that in the time period between t₃ and t₄ the electrolyser virtually injects power depending on the power set point by reducing the load.

In the example shown in Figure 1 the electrolyser is able to provide 200% negative control power, for instance 200kW, and 100% positive control power, for instance 100kW, to stabilize the grid.

Generally, the reaction time of the electrolyser is very small. A cold start Δt_{cs} may for example be realized within 10 minutes and warm start Δt_{ws} may be realized within 10 seconds.

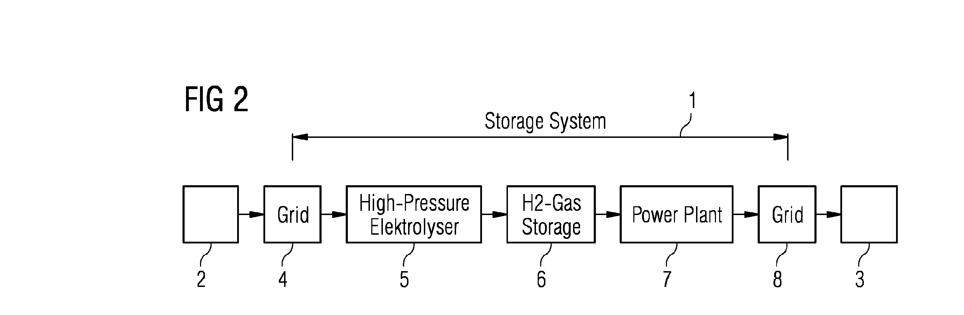

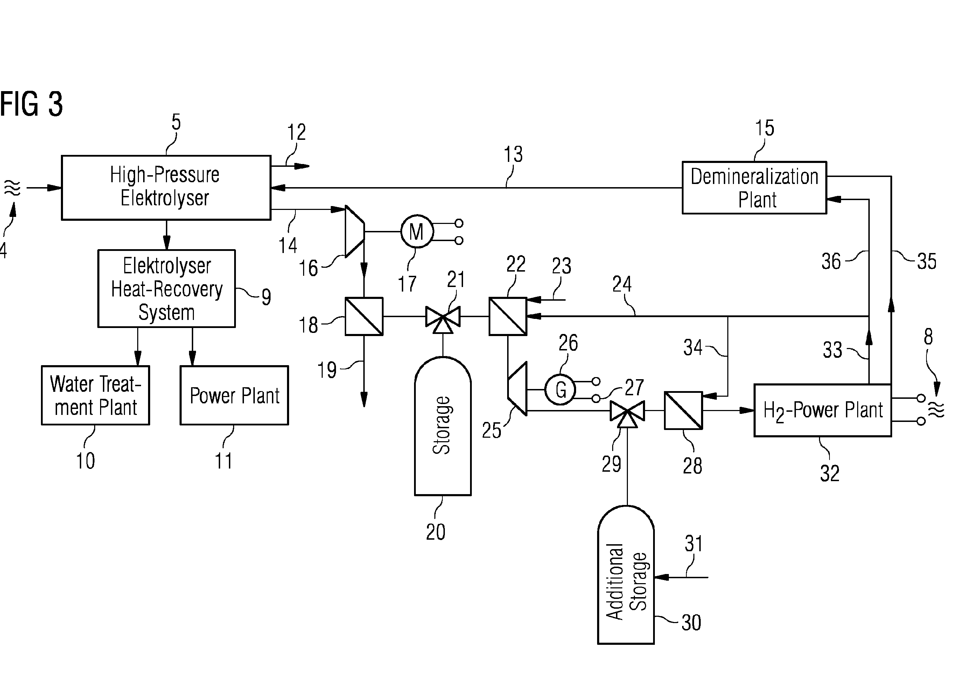

The invention increases the "inertia", also called primary-control-ability, of an energy storage system comprising an electrolyser as, for example, described in EP 2 138 678 A1 (see Figure 2 and 3), by introducing a special operation mode and control system. This can be achieved by two different operation schemes. In the first operation mode primary control is realized by the electrolyser only. In the second operation mode the primary control is realized by the electrolyser and the thermal power plant.

In the first operation mode the used electrolyser is capable to very fast changes of the load set point. Depending on the power set point the electrolyser can virtually "inject" power by reducing the load (see time period t₃ to t₄ in Figure 1) or it can dissipate power by increasing the load (see time period t₁ to t₂ in Figure 1). The maximum load changes are directly linked to the rated power/rated overload capability of the electrolyser, which limits the performance. The thermal power plant is not in operation in the first mode. In the second operation mode the parallel operation of the electrolyser and the thermal power plant significantly increases the operation range.

In both cases a control unit controls all activities between storage and electrical grid. The control unit may obtain a signal comprising information about the current load of the grid. Then an adapted load set point of the grid may be determined by the control unit. The control unit may then send a signal to the electrolyser for changing the power set point of the electrolyser depending on the adapted load set point of the grid.

In addition, most known primary reserve mode operated units can provide this service for a very limited time only. That is the reason why after 15 minutes, the secondary reserve starts, which is offered by different power plants. The present invention does not require that take over. In contrast, the system provides the secondary reserve as well and can be operated as long as storage capacity is left, usually hours to weeks.

Electrolyser and thermal power plant are active components to provide primary reserve. A special controller coordinates the interaction between the storage components, for example the components of the used energy storage system, for instance as described in EP 2 138 678 A1, and the electrical grid needs. The thermal power plant alone cannot offer the magnitude, for example more than 1 MW, of primary control. The fast changes are done via the electrolyser only.

Examples for energy storage systems, which may be used in the context of the present invention, especially for performing the inventive method, will now be described with reference to Figures 2 and 3. The described energy storage systems correspond to the energy storage systems described in EP 2 138 678 A1.

Figure 2 schematically shows an inventive energy storage system 1, which comprises a high-pressure electrolyser 5, a hydrogen gas storage 6, a power plant 7 and grid connections 4, 8. Electrical energy, for example renewable energy, coming from an electrical energy delivery unit 2 is delivered to the high pressure electrolyser 5 by means of a grid 4. In the high pressure electrolyser 5 hydrogen is separated from water by means of electrolysis. The hydrogen is then stored in the hydrogen gas storage 6. When needed, the stored hydrogen is supplied to the power plant 7. The electrical energy produced by the power plant 7 is then supplied to a grid 8.

Figure 3 schematically shows an example for a detailed embodiment of an energy storage system 1. Figure 3 shows a high pressure electrolyser 5 which is delivered with electrical energy by means of a grid 4. Water 13 coming from a demineralisation plant 15 is guided to the high-pressure electrolyser 5. In the high pressure electrolyser 5 the water 13 is decomposed into oxygen 12 and hydrogen 14. The high-pressure electrolyser 5 is further connected to an electrolyser heat-recovery system 9. The heat which is recovered by means of the electrolyser heat-recovery system 9 can be used for a water treatment plant 10 and/or for a power plant 11, for example. The water treatment plant 10 can especially be part of the demineralisation plant 15 which demineralises the water 13 for the high-pressure electrolyser 5.

The separated hydrogen from the high-pressure electrolyser 5 is guided to a hydrogen compressor 16. The hydrogen compressor 16 can be driven by a motor 17.

The compressed hydrogen is then let to a heat exchanger 18 where it is cooled. The compressed and cooled hydrogen is then guided to a hydrogen storage 20. Between the heat exchanger 18 and the hydrogen storage 20 a control valve 21 is located. The heat from the heat exchanger 18 can, for example, be stored in a thermal storage or can be used in a demineralisation plant, for instance in the demineralisation plant 15. The heat flow away from the heat exchanger 18 is indicated by an arrow 19.

If the hydrogen which is stored in the hydrogen storage 20 is needed it can be guided via the control valve 21 to a pre-heater 22 where it is pre-heated. The thermal energy which is needed for pre-heating the hydrogen in the pre-heater 22 may be taken from a thermal storage. This is indicated by an arrow 23. Alternatively or additionally, the needed heat can be delivered from a power plant 32. This is indicated by arrows 33 and 24.

The pre-heated hydrogen is then guided to a hydrogen expander 25, which may be a turbine. The hydrogen expander 25 or the turbine activates a generator 26 which produces electrical energy. The electrical energy produced by the generator 26 is than supplied to a grid 27.

The hydrogen, which is expanded by means of the hydrogen expander 25, is then guided to a fuel gas pre-heater 28. Before reaching the fuel gas pre-heater 28, the hydrogen can be mixed with natural gas and/or with a diluent. For this purpose an additional gas storage 30 is connected to a pipe between the hydrogen expander 25 and the fuel gas pre-heater 28 via a control valve 29. The additional gas storage 30 can be a gas storage for natural gas or other gas to blend the hydrogen before combustion in case this is preferable over using pure hydrogen. The additional storage 30 can be delivered by an external supply. This is indicated by an arrow 31.

The hydrogen or the mixture of hydrogen with a natural gas and/or the diluent which is pre-heated by means of the fuel gas pre-heater 28 is then led to a power plant 32. In the power plant 32 electrical energy is generated. The power plant could be a simple cycle power plant (without exhaust heat utilization) or a combined cycle power plant (with exhaust heat utilization in a toping cycle, e.g. steam cycle) for highest efficiency. The produced electrical energy is supplied to a grid 8. The waste heat from the power plant 32 can be used for the pre-heater 22 and/or for the fuel gas pre-heater 28. This is indicated by arrows 33, 24 and 34. Furthermore, the heat from the power plant can be used for the demineralisation plant 15. This is indicated by an arrow 36. Water produced during the combustion process can be extracted from the exhaust stream and fed to the demineralisation plant 15 to reduce the water consumption of the storage system. The arrow 35 indicates the water flow from the power plant 32 to the demineralisation plant 15.

The heat recovery loops at the high-pressure hydrogen compressor 16, at the high pressure hydrogen expander 25 and at the fuel gas pre-heater 28 increase the efficiency of the storage. Generally, the described energy storage system and the inventive method for storing and supplying energy, which can be performed by means of the described energy storage system, provides a large scale energy storage which can store very large quantities of energy.

The present invention utilizes the fast controllability of an electrolyser for primary reserve services, including a controller to coordinate the actions and even increasing the power range further by using the thermal power plant of the storage system. However electrolyser and thermal power plant must not be at the same physical location, they can be distributed and just collected via the electrical grid.

## Claims

1. Method for stabilizing an electrical grid (4, 8) comprising a load set point,
**characterised in**
- connecting an energy storage system (1) comprising an electrolyser (5) to the grid (4, 8),
- operating the electrolyser (5) at a predetermined power set point, and
- changing the power set point of the electrolyser (5) depending on changes of the load set point of the grid (4, 8) .

2. The method as claimed in claim 1,
**characterised in**
dissipating power of the grid (4, 8) by increasing the load of the electrolyser (5) or releasing power into the grid (4, 8) by reducing the load of the electrolyser (5) depending on changes of the load set point of the grid (4, 8).

3. The method as claimed in claim 1 or 2,
**characterised in**
changing the power set point of the electrolyser (5) up to 100 MW or up to 1000 MW.

4. The method as claimed in any of the claims 1 to 3,
**characterised in**
using an energy storage system (1) comprising a thermal power plant (7) and operating the electrolyser (5) and the thermal power plant (7) at the same time depending on changes of the load set point of the grid (4, 8).

5. The method as claimed in any of the claims 1 to 4,
**characterised in**
storing the hydrogen produced by the electrolyser (5).

6. The method as claimed in any of the claims 1 to 5,
**characterised in**
controlling the power set point of the electrolyser (5).

7. The method as claimed in any of the claims 1 to 6,
**characterised in**
controlling the load set point of the grid (4, 8).

8. The method as claimed in any of the claims 1 to 7,
**characterised in that**
providing a power change from 0% to 100% of the nominal power of the electrolyser (5) within less than 10 minutes and/or providing a power change from 100% to 200% or from 200% to 300% of the nominal power of the electrolyser (5) within less than 10 seconds.

9. The method as claimed in any of the claims 1 to 8,
**characterised in**
connecting a thermal power plant to the grid and dissipating power of the grid (4, 8) by increasing the load of the electrolyser (5) or releasing power into the grid (4, 8) by reducing the load of the electrolyser (5) and/or increasing the power output of the thermal power plant depending on changes of the load set point of the grid (4, 8).

10. The method as claimed in claim 9,
**characterised in**
operating the thermal power plant and the electrolyser in combination and at a nominal power level of the same magnitude order.

11. The method as claimed in claim 10,
**characterised in**
operating the electrolyser at a nominal power which has a value between 0.3 and 0.7 of the nominal power of the thermal power plant.

12. A use of an energy storage system (1) comprising an electrolyser (5) for stabilizing an electrical grid (4, 8).

13. The use as claimed in claim 12,
**characterised in**
using an energy storage system (1) comprising a thermal power plant (7) and/or a hydrogen gas storage (6).

14. The use as claimed in claim 12 or 13,
**characterised in**
using an energy storage system (1) comprising a control unit for controlling the power set point of the electrolyser (5) and/or the load set point of the grid (4, 8).

15. The use as claimed in any of the claims 12 to 14,
**characterised in**
using the energy storage system (1) for performing a method for stabilizing an electrical grid (4, 8) as claimed in any of the claims 1 to 11.
